# EUROPEAN PATENT APPLICATION

(11) **EP 4 386 946 A1**
(43) Date of publication of application: **19.06.2024**
(21) Application number: 23214465.9
(22) Date of filing: 05.12.2023
(51) Int. Cl.: H01M 50/103, H01M 50/202, H01M 50/209, H01M 50/244

(54) **BATTERY MODULE AND BATTERY PACK INCLUDING THE SAME**

(30) Priority: 12.12.2022 KR 20220172267
(71) Applicant: SK On Co., Ltd., Seoul 03161 (KR)
(72) Inventor: LEE, Gang U, 34124 Daejeon (KR)
(74) Representative: Stolmár & Partner Patentanwälte PartG mbB

(57) **Abstract**

A battery module is disclosed.

In some implementations, the battery module includes a plurality of cell assemblies respectively including a plurality of battery cells stacked in a first direction, a support member disposed between the plurality of cell assemblies, and a plurality of end covers facing at least one of the plurality of cell assemblies in the first direction, wherein the support member protrudes in the first direction, relative to the plurality of end covers.

## Description

### TECHNICAL FIELD

The present disclosure relates to a battery module and a battery pack including the same.

### BACKGROUND

Unlike primary batteries, secondary batteries (battery cells) are convenient, in that they may be charged and discharged and have come to prominence as a power source for various mobile devices and electric vehicles.

Battery modules are obtained by modularizing a plurality of battery cells by electrically connecting the battery cells due to the need for high power and high capacity, and a battery pack including a plurality of battery modules may be applied to devices requiring high power, such as electric vehicles.

Such a high-capacity battery pack may include multiple frame structures inside a case (or a housing) for structural rigidity.

When assembling a battery module inside a battery pack, dead space may be formed between the battery module and the aforementioned frame structure due to manufacturing tolerance. As a power value required for the battery pack increases, more battery modules are arranged, and as a result, dead space may increase, eventually leading to a decrease in energy density of the battery pack.

In addition, in the battery packs, it may be difficult to dispose high-capacity and large battery modules due to spatial constraints based on the arrangement of the frame structure.

### SUMMARY

An aspect of the present disclosure is to provide a battery pack capable of maintaining structural rigidity, while having high energy density.

An aspect of the present disclosure is to provide a battery module and a battery pack having high structural stability by disposing a support member between a plurality of battery cells.

An aspect of the present disclosure is to provide a structure in which a large battery module may be disposed in a limited space inside a battery pack.

In some embodiments of the present disclosure, a battery module includes: a plurality of cell assemblies respectively including a plurality of battery cells stacked in a first direction; a support member disposed between the plurality of cell assemblies; and a plurality of end covers facing at least one of the plurality of cell assemblies in the first direction, wherein the support member protrudes in the first direction, relative to the plurality of end covers.

The battery module may further include: a module housing in which the plurality of cell assemblies and the support member are accommodated, wherein the module housing includes: a top cover covering the top of the plurality of cell assemblies; and a side cover connected to the top cover and facing the plurality of cell assemblies in a second direction, perpendicular to the first direction.

At least one of the plurality of battery cells may include: a case in which an electrode assembly is accommodated; and a cap assembly coupled to the case, in which electrode terminals are arranged.

The cap assembly may face the top cover.

A bottom surface of the case may be exposed to the outside of the module housing.

The support member may include: a body portion facing at least one of the plurality of cell assemblies in a second direction, perpendicular to the first direction; and an extension portion extending from the body portion in the first direction and passing between the plurality of end covers.

The extension portion may be disposed on each of both end portions of the support member in the first direction.

The extension portion and the plurality of end covers may be alternately arranged in the second direction.

The plurality of end covers may be welded to the extension portion.

In some embodiments of the present disclosure, a battery pack includes: a plurality of battery modules; and a pack housing in which the plurality of battery modules are accommodated, wherein at least one of the plurality of battery modules includes: a plurality of cell assemblies respectively including a plurality of battery cells stacked in a first direction; a support member disposed between the plurality of cell assemblies; and a plurality of end covers facing at least one of the plurality of cell assemblies in the first direction, wherein the support member protrudes in the first direction, relative to the plurality of end covers and is coupled to the pack housing.

The support member may include: a body portion facing at least one of the plurality of cell assemblies in a second direction, perpendicular to the first direction; and an extension portion extending from the body portion in the first direction and passing between the plurality of end covers.

The pack housing may include: a bottom frame facing bottom surfaces of the plurality of battery modules; and a plurality of side frames connected to the bottom frame and facing the plurality of battery modules in the first direction, wherein the extension portion is coupled to the plurality of side frames.

A length of the support member in the first direction may be equal to or greater than a gap between the plurality of side frames.

The extension portion may include an insertion protrusion, and the plurality of side frames may include an insertion groove into which the insertion protrusion is inserted.

The battery pack may further include: a fastening member fastened to the insertion groove through the insertion protrusion.

In some embodiments of the present disclosures, a battery pack capable of maintaining structural rigidity, while having high energy density, may be implemented.

In some embodiments of the present disclosures, a battery module and a battery pack having high structural stability may be provided by disposing the support member between a plurality of battery cells.

In some embodiments of the present disclosures, a large battery module may be disposed within a limited space inside a battery pack.

### BRIEF DESCRIPTION OF DRAWINGS

Certain aspects, features, and advantages of the present disclosure are illustrated by the following detailed description with reference to the accompanying drawings.
FIG. 1 is a perspective view of a battery module;
FIG. 2 is an exploded perspective view of a battery module;
FIG. 3 is an exploded perspective view of a battery cell included in a battery module;
FIG. 4 illustrates a configuration in which an end cover is coupled to a module housing and a support member;
FIG. 5 is a top view of a battery module;
FIG. 6 illustrates a configuration in which a battery module is disposed in a pack housing of a battery pack;
FIG. 7 is a diagram illustrating coupling of a support member of a battery module to a pack housing; and
FIG. 8 is diagram illustrating coupling of a support member of a battery module to a pack housing.

### DETAILED DESCRIPTION

Prior to the description of the present invention, terms and words used in the present specification and claims to be described below should not be construed as limited to ordinary or dictionary terms, and should be construed in accordance with the technical idea of the present invention based on the principle that the inventors may properly define their own inventions in terms of terms in order to best explain the invention. Therefore, the embodiments described in the present specification and the configurations illustrated in the drawings are merely the most preferred embodiments of the present invention and are not intended to represent all of the technical ideas of the present invention, and thus should be understood that various equivalents and modifications may be substituted at the time of the present application.

Also, the same reference numerals or symbols respectively illustrated in the attached drawings denote parts or elements that perform the actually same functions. For convenience of description and understanding, the parts or elements will be described by using the same reference numerals or symbols even in different exemplary embodiments. In other words, although elements having the same reference numerals are all illustrated in a plurality of drawings, the plurality of drawings do not mean one exemplary embodiment.

As used herein, the singular forms are intended to include the plural forms as well, unless the context clearly indicates otherwise. It will be further understood that the terms "comprises," "comprising," etc. When used in this specification, specify the presence of stated features, integers, steps, operations, elements, and/or components, but do not preclude the presence or addition of one or more other features, integers, steps, operations, elements, components, and/or groups thereof.

In addition, in the present specification, the expressions, such as a top side, a bottom side, a side face, a rear surface, and the like, are described based on the drawings and may be expressed differently when the direction of the corresponding object is changed.

The terms including ordinal numbers, such as 'first', 'second', etc. May be used herein to distinguish elements from one another. These ordinal numbers are merely used to distinguish the same or similar elements from one another, and meanings of the terms are not construed as being limited by the using of the ordinal numbers. For example, use orders or arrangement orders of elements combined with these ordinal numbers are not limited by numbers thereof. The ordinal numbers may be redisposed with one another.

Exemplary embodiments of the present disclosure will now be described in detail with reference to the accompanying drawings.

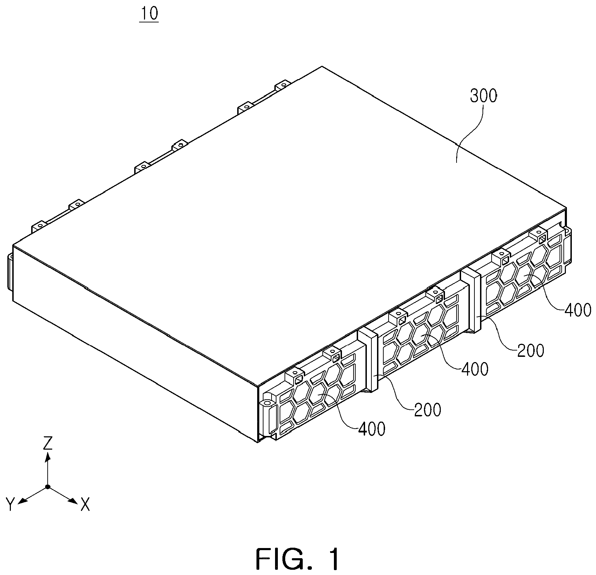

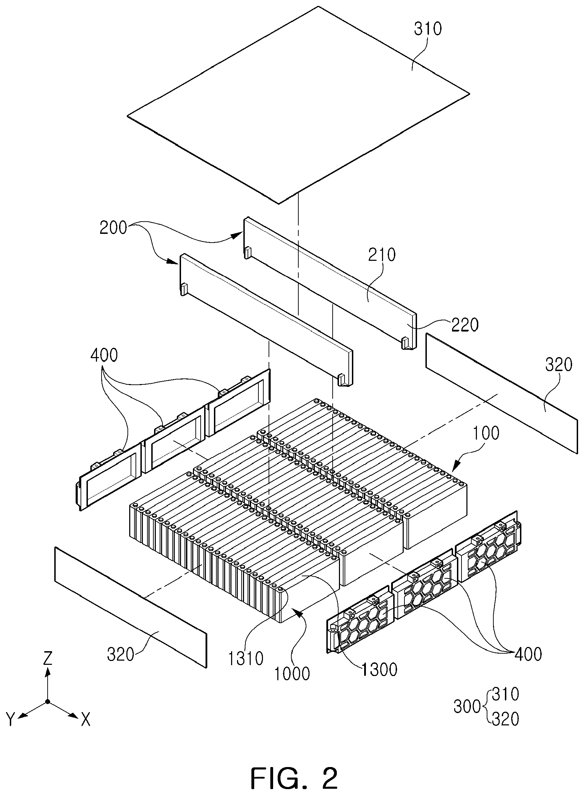

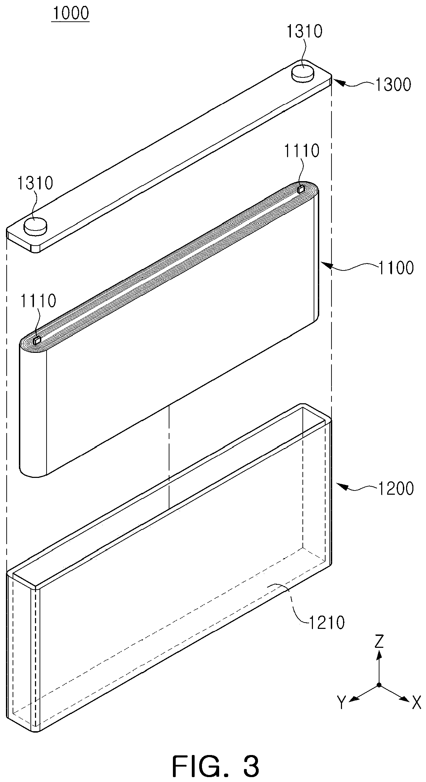

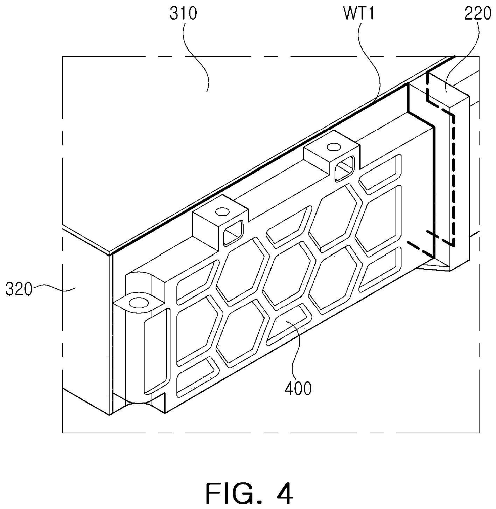

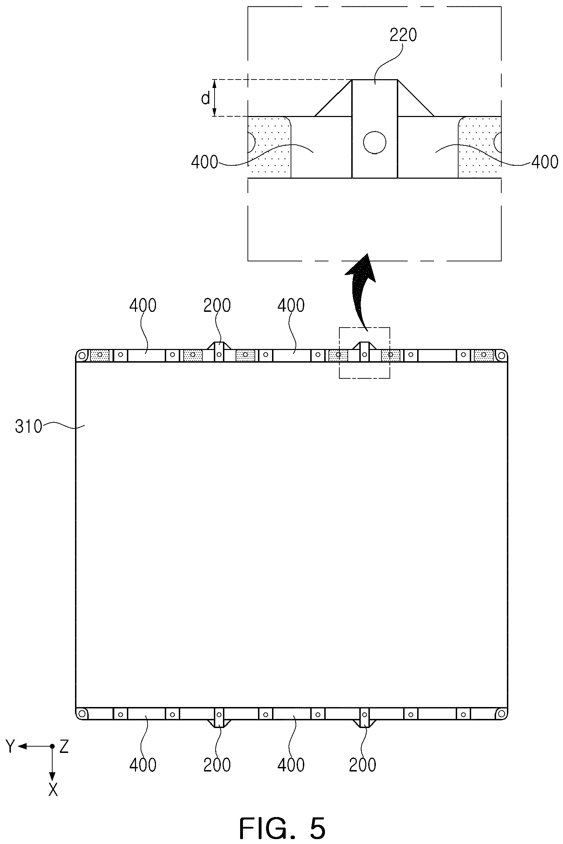

FIG. 1 is a perspective view of a battery module 10. FIG. 2 is an exploded perspective view of the battery module 10. FIG. 3 is an exploded perspective view of a battery cell 1000 included in the battery module 10. FIG. 4 illustrates a configuration in which an end cover 400 is coupled a module housing 300 and a support member 200. FIG. 5 is a top view of the battery module 10.

The battery module 10 may include a plurality of cell assemblies 100, a support member 200 disposed between the cell assemblies 100, and a module housing 300 providing an internal space in which the cell assemblies 100 are accommodated.

A plurality of cell assemblies 100 may be arranged inside the module housing 300.

Each cell assembly 100 may include a plurality of battery cells 1000 and may be configured to store or emit electrical energy.

The cell assembly 100 may include a plurality of battery cells 1000 stacked in one direction, a busbar (not shown) electrically connecting the plurality of battery cells 1000, and a cell protection member (not shown) disposed between the plurality of battery cells 1000 to protect the battery cells 1000.

The battery cells 1000 of the cell assembly 100 may be stacked and arranged in one direction (for example, an X-axis direction) and may be electrically connected to each other to store or output electrical energy. In the following description, a stacking direction of the battery cells 1000 included in the cell assembly 100 is referred to as a 'first direction' or a 'cell stacking direction.'

The cell assembly 100 may include a plurality of busbars (not shown) electrically connecting the battery cells 1000. The busbar (not shown) may be electrically connected to a terminal portion 1310 of each battery cell 1000.

The cell assembly 100 may further include a cell protection member (not shown) to protect the battery cell 1000. The cell protection member (not shown) may be disposed between the plurality of battery cells 1000. For example, the cell protection member (not shown) may be an insulating member (not shown) or a compression member (not shown).

The insulating member (not shown) may block flames or high-temperature heat energy from propagating between neighboring battery cells 1000, thereby preventing a chain ignition phenomenon from occurring inside the cell assembly 100. For example, the insulating member (not shown) may include at least one of mica, silica, silicate, graphite, alumina, ceramic wool, or aerogel, which may perform the function of preventing the spread of heat and/or flames.

The compression member (not shown) may be compressed and elastically deformed when a specific battery cell 1000 expands, thereby suppressing expansion of the overall volume of the cell assembly 100. For example, the compression member (not shown) may be formed of polyurethane foam and may have a size corresponding to a large surface of the battery cell 1000.

An adhesive member (not shown) capable of fixing the battery cells 1000 to each other may be disposed between the battery cells 1000. For example, the adhesive member (not shown) may be configured as a binder or adhesive tape. The plurality of battery cells 1000 may be stacked in the first direction (the X-axis direction) and fixed to each other by an adhesive member (not shown).

In one battery module 10, a plurality of cell assemblies 100 may be electrically connected to each other and configured to output a design power value required for the battery module 10. For example, two cell assemblies 100 facing each other with the support member 200 therebetween may be connected to each other in series or parallel.

Alternatively, in one battery module 10, the plurality of cell assemblies 100 may be configured to be electrically separated from each other. For example, two cell assemblies 100 facing each other with a support member 200 therebetween may be electrically separated from each other, and each cell assembly 100 may be configured to be electrically connected to another neighboring battery module 10.

The battery cell 1000 included in the cell assembly 100 may be a secondary battery. As an example, the battery cell 1000 may be formed of a lithium secondary battery, but is not limited thereto.

The battery cell 1000 may be a prismatic secondary battery in which an electrode assembly is stored inside a rigid case 1200.

The battery cell 1000 may include an electrode assembly 1100, a case 1200, and a cap assembly 1300.

The electrode assembly 1100 may be received in the case 1200 together with an electrolyte.

The electrode assembly 1100 may include an uncoated portion 1110 on which no active material is applied. The uncoated portion 1110 may be electrically connected to the terminal portion 1310 of the cap assembly 1300.

The case 1200 may be formed of a conductive metal, such as aluminum, aluminum alloy, or nickel-plated steel. The case 1200 may have a hexahedral shape that is open in at least one direction so that the electrode assembly 110 may be inserted and seated. An inner surface of the case 1200 may be insulated to be insulated from the electrode assembly 1100.

The cap assembly 1300 may seal the top opening of the case 1200 and close an internal space of the case 1200. At least a portion of the cap assembly 1300 may be formed of the same material as that of the case 1200 and may be welded and coupled to the case 1200.

The cap assembly 1300 may include the terminal portion 1310 electrically connected to the uncoated portion 1110 of the electrode assembly 1100. The terminal portion 1310 may be formed of metal.

However, the type of battery cell included in the battery module 10 is not limited to the prismatic secondary battery described above. For example, the battery cell may be a pouch-type secondary battery having a structure in which an electrode assembly is stored inside a flexible pouch.

The module housing 300 may include a top cover 310 covering the top of the plurality of cell assemblies 100 and a side cover 320 connected to the top cover 310.

Referring to FIG. 2, the top cover 310, formed integrally, may be disposed to cover top surfaces of the plurality of cell assemblies 100. The side cover 320 may be connected to the top cover 310 to cover the side of the cell assembly.

However, the specific shapes of the top cover 310 and the side covers 320 are not limited to those shown in FIG. 2. For example, a plurality of top covers 310 of the module housing 300 may be provided, and in this case, each top cover 310 may be disposed to cover a different cell assembly 100.

The module housing 300 may have a shape that is open in a downward direction (e.g., in a negative Z-axis direction). For example, the module housing 300 may have an inverted 'U' shape in which the top cover 310 and the side cover 320 are connected to each other and a bottom portion thereof is open.

Accordingly, the battery module 10 may have a structure in which a bottom surface of the cell assembly 100 is exposed to the outside of the module housing 300. For example, the battery cell 1000 may be disposed so that the cap assembly 1300 faces the top cover 310 of the module housing 300, and accordingly, a bottom surface 1210 of the case 1200 of the battery cell 1000 may be exposed to the outside of the module housing 300. Since the case 1200 of the battery cell 1000 has an exposed structure, heat dissipation efficiency of the battery module 10 may increase.

The battery module 10 may include an end cover 400 covering one side of the cell assembly 100. The end cover 400 may include a rigid material (e.g., a metal material, such as aluminum) to protect the cell assembly 100 from external impacts and support the cell assembly 100.

The end cover 400 may be disposed to face the cell assembly 100 in the first direction (the X-axis direction).

The end cover 400 may be coupled to the module housing 300. For example, referring to FIG. 4, a top side of the end cover 400 may be welded in contact with the top cover 310. In addition, one side of the end cover 400 disposed at the edge of the battery module 10 in a second direction (a Y-axis direction) may be welded in contact with the side cover 320. In addition, the other side of the end cover 400 may be welded in contact with the support member 200.

A first welding line WT1 may be formed along a boundary line where the end cover 400 contacts other members (e.g., the module housing 300 or the support member 200). Welding may proceed along the first welding line with the end cover 400 disposed in a correct position, and thus, the end cover 400 may be firmly fixed.

However, the method of fixing the end cover 400 is not limited to the welding method described above. For example, the end cover 400 may be fastened to the module housing 300 by a separate fastening member (e.g., a bolt).

A plurality of end covers 400 may be arranged side by side to form one side of the battery module 10. For example, as shown in FIG. 2, a plurality of end covers 400 may be arranged side by side in the second direction (the Y-axis direction) to form one side of the battery module 10. In this case, the second direction (the Y-axis direction) may be a direction, perpendicular to the first direction (the X-axis direction). A portion of the support member 200 may be located between the end covers 400 arranged in the second direction (the Y-axis direction).

The end covers 400 may be arranged to match the cell assemblies 100, respectively. For example, both ends of one cell assembly 100 may be covered with a pair of end covers 400 spaced apart from each other in the first direction (the X-axis direction).

A pair of end covers 400 spaced apart from each other in the first direction (the X-axis direction) may press the cell assembly from both sides. For example, a pair of end covers 400 spaced apart from each other in the first direction (the X-axis direction) may be coupled to the module housing 300 and the support member 200 to press the cell assembly 100 in directions facing each other. Accordingly, the cell assembly 100 disposed between the pair of end covers 400 may be stably fixed inside the module housing 300.

Meanwhile, when the end cover 400 includes a metallic material, an insulating member (not shown) may be additionally disposed on the inside of the end cover 400 to prevent an electrical short-circuit between the end cover 400 and the cell assembly 100.

The specific structure of the end cover 400 is not limited to the above. For example, the end cover 400 may be integrally formed to form one side of the battery module 10. In this case, in order to expose the support member 200 to the outside of the battery module 10, the integrated end cover 400 may include a groove through which the support member 200 may pass.

The battery module 10 may include one or more support members 200 disposed between the cell assemblies 100.

The support member 200 may be disposed across the internal space of the module housing 300 and may partition the internal space of the module housing 300. A plurality of support members 200 may be provided. The plurality of support members 200 may be arranged to be spaced apart from each other in the second direction (the Y-axis direction) inside the module housing 300.

The support member 200 may include a rigid material (e.g., a metal material, such as aluminum) and may structurally support the battery module 10.

In addition, at least a portion of the support member 200 may be exposed to the outside of the battery module 10 and serve as a structure used to fix the battery module 10 to another member (for example, a pack housing of a battery pack).

At least a portion of the support member 200 may be disposed to face the cell assembly 100 in the second direction (the Y-axis direction). The support member 200 may include a body portion 210 facing the cell assembly 100 in the second direction (the Y-axis direction) and an extension portion 220 extending from the body portion 210 in the first direction, perpendicular to the second direction (the Y-axis direction). The extension portion 220 may be disposed at both end portions of the body portion 210 in the first direction (the X-axis direction) to form both end portions of the support member 200 in the first direction (the X-axis direction).

A length of the support member 200 in the first direction (the X-axis direction) may be greater than a length of one of the battery cells 1000 in the first direction (the X-axis direction). When the support member 200 is disposed between the cell assemblies 100, both end portions of the support member 200 may protrude relative to the cell assembly 100 in the first direction (the X-axis direction).

The support member 200 may be disposed so that at least a portion is exposed to the outside of the battery module 10. For example, referring to FIG. 5, the extension portion 220 of the support member 200 may be disposed to protrude between two end covers 400 by a predetermined length d in the first direction (the X-axis direction), relative to the end covers 400, and accordingly, the extension portion 220 of the support member 200 may be exposed to the outside of the battery module 10.

In the support member 200, the body portion 210 may face the battery cell 1000 of the cell assembly 100 in the second direction (the Y-axis direction), and the extension portion 220 may face the end cover 400 in the second direction (the Y-axis direction). Here, the extension portion 220 and the end cover 400 may be arranged to contact each other and may be welded and coupled to each other.

The support members 200 may be alternately arranged with the cell assembly 100. For example, the plurality of cell assemblies 100 and the support members 200 may be alternately arranged in the second direction (the Y-axis direction). In this case, a plurality of support members 200 may be provided to correspond to the quantity of cell assemblies 100. For example, the battery module 10 may include N cell assemblies 100 and N-1 support members 200, (where N is a natural number of 2 or greater).

According to embodiments, the battery module 10 having a high energy capacity may be manufactured by assembling a plurality of cell assemblies 100 with each other. In addition, the battery module 10 having high structural rigidity may be implemented by disposing the support member 200 between the cell assemblies 100. Accordingly, manufacturers may quickly and easily produce battery modules 10 of various sizes and types.

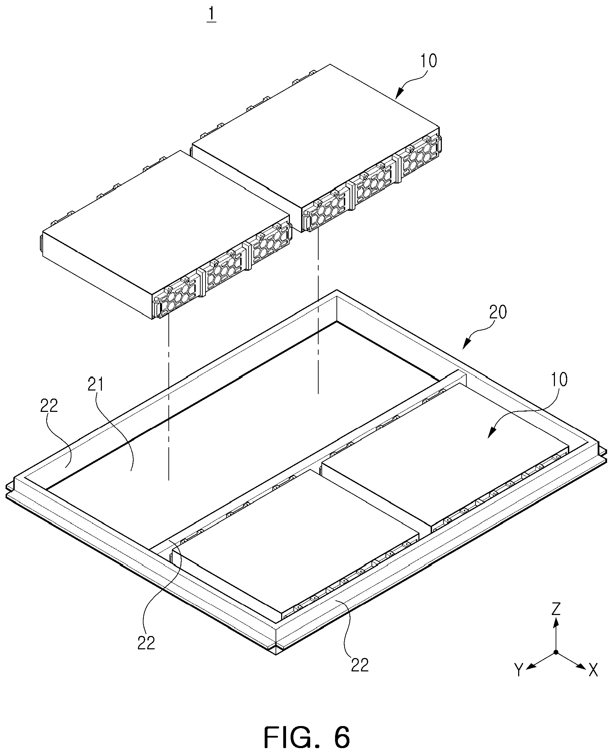

Hereinafter, a battery pack 1 including a plurality of battery modules 10 according to embodiments will be described with reference to FIGS. 6 to 8.

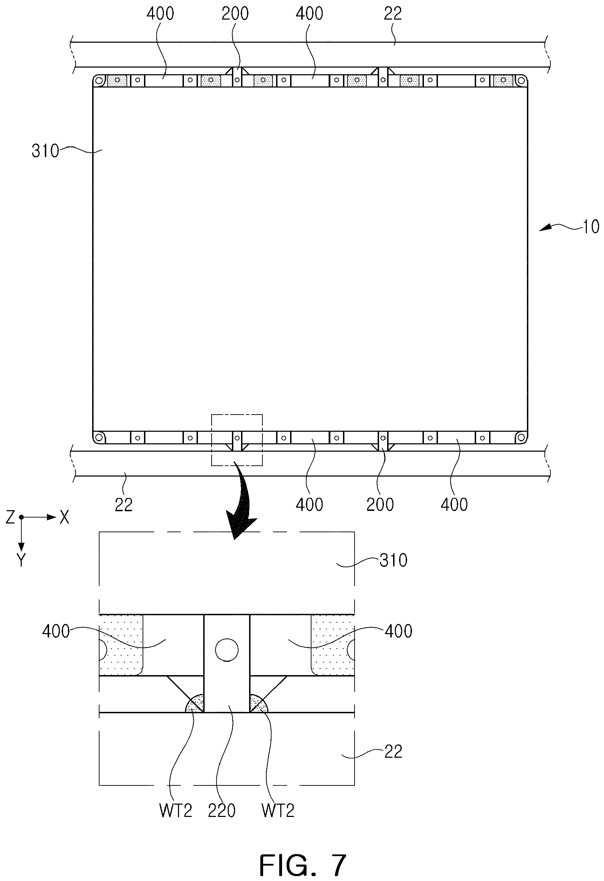

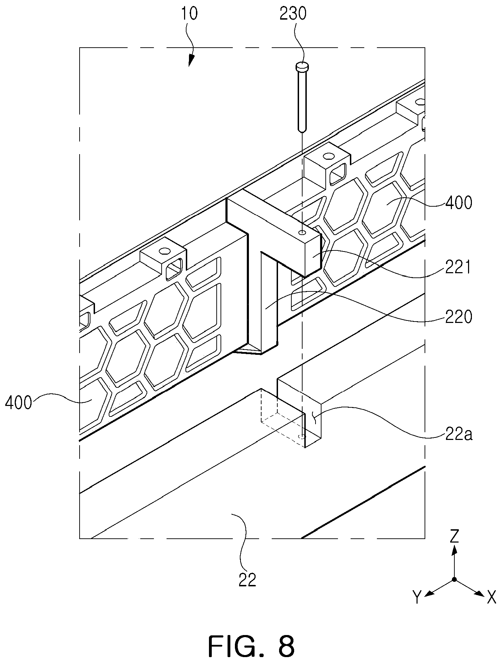

FIG. 6 illustrates the battery module 10 disposed in a pack housing 20 of the battery pack 1. FIG. 7 is a diagram illustrating coupling of the support member 200 of the battery module 10 to the pack housing 20. FIG. 8 is a diagram illustrating coupling of the support member 200 of the battery module 10 to the pack housing 20. Since the battery module 10 described with reference to FIGS. 6 to 8 corresponds to the battery module 10 described above with reference to FIGS. 1 to 5, redundant descriptions may be omitted.

The battery pack 1 may include a plurality of battery modules 10 and the pack housing 20 accommodating the plurality of battery modules 10. The plurality of battery modules 10 may be accommodated inside the pack housing 20 and electrically connected to each other.

The pack housing 20 may include a bottom frame 21 on which the plurality of battery modules 10 are arranged and a side frame 22 facing the side of the battery module 10. Although not shown in FIGS. 6 to 8, the pack housing 20 may further include a top frame (not shown) covering the top of the battery module 10.

The bottom frame 21 and the side frame 22 may be connected to each other. The top frame (not shown) may be connected to the side frame 22 and cover an internal space of the pack housing 20.

A plurality of side frames 22 may be disposed on a top surface of the bottom frame 21. For example, referring to FIG. 6, a plurality of side frames 22 may be arranged to be spaced apart from each other on the bottom frame 21 in the first direction (the X-axis direction). One of the plurality of side frames 22 may be disposed at the edge of the bottom frame 21 to form the side of the pack housing 20, and the other thereof may be disposed to partition the internal space of the pack housing 20.

The battery module 10 may be disposed between two adjacent side frames 22. The side frame 22 may face at least one of the plurality of battery modules 10 in the first direction (the X-axis direction). For example, as shown in FIG. 6, a plurality of battery modules 10 may be respectively disposed in spaces partitioned by the side frame 22. In this case, the battery module 10 may be disposed so that the end cover 400 faces the side frame 22 in the first direction (the X-axis direction).

The battery module 10 may be coupled to the side frame 22 and fixed inside the pack housing 20. For example, the support member 200 protruding in the first direction (the X-axis direction) from the side of the battery module 10 may be mechanically fastened or welded to the pack housing 20, and accordingly, the battery module 10 may be fixed to the pack housing 20.

A heat dissipation member (not shown) may be disposed between the bottom frame 21 of the pack housing 20 and the cell assembly 100 of the battery module 10. The heat dissipation member (not shown) may be disposed so that one surface thereof is in contact with the cell assembly 100 and the other surface thereof opposite to the one surface is in contact with the bottom frame 21. The heat dissipation member (not shown) may be provided as a thermally conductive adhesive. The heat dissipation member (not shown) may fill a space between the cell assembly 100 and the bottom frame 21 to enable more active heat transfer by conduction. Accordingly, the heat dissipation efficiency of the battery module 10 or the battery pack 10 may increase.

Referring to FIG. 7, as the support member 200 of the battery module 10 is welded and coupled to the pack housing 20, the battery module 10 may be fixed inside the pack housing 20.

A length of the support member 200 in the first direction (the X-axis direction) may be approximately equal to a distance between two adjacent side frames 22 in the first direction (the X-axis direction). Therefore, when the battery module 10 is disposed between the side frames 22, both end portions of the support member 200, that is, the extension portion 220 of the support member 200, may contact the side frame 22.

The support member 200 and the side frame 22 may be coupled by welding. Referring to FIG. 7, a welding point WT2 may be set along a portion where the extension portion 220 of the support member 200 and the side frame 22 contact each other. The welding point WT2 may be set to extend in a third direction (a Z-axis direction), which is a height direction of the pack housing 20. Here, the third direction (the Z-axis direction) may be perpendicular to both the first direction (the X-axis direction) and the second direction (the Y-axis direction) described above.

Since the support member 200 protrudes relative to the end cover 400 of the battery module 10 in the first direction (the X-axis direction), a predetermined gap will be formed between the end cover 400 and the side frame 22, and the welding process may be performed safely and easily using the predetermined gap.

The coupling structure of the battery module 10 and the pack housing 20 is not limited to the above. For example, as shown in FIG. 8, the battery pack 1 may further include a separate fastening member 230 coupling the battery module 10 to the pack housing 20.

For example, referring to FIG. 8, the extension portion 220 of the support member 200 may include an insertion protrusion 221 protruding in the first direction (the X-axis direction). The side frame 22 of the pack housing 20 may include an insertion groove 22a into which the insertion protrusion 221 is inserted. The insertion protrusion 221 may be configured to be inserted into the insertion groove 22a in the third direction (the Z-axis direction). Therefore, in the process of receiving the battery module 10 in the pack housing 20, the insertion protrusion 221 may be naturally inserted into the insertion groove 22a.

The fastening member 230 may pass through the insertion protrusion 221 and be fastened to the insertion groove 22a. Accordingly, the support member 200 may be firmly fixed to the side frame 22.

As the extension portion 220 of the support member 200 further includes the insertion protrusion 221, the length of the support member 200 in the first direction (the X-axis direction) may be greater than the distance between two adjacent side frames 22 in the first direction (the X-axis direction).

The specific shapes of the insertion protrusion 221 and the insertion groove 22a are not limited to those shown in FIG. 8. For example, the insertion protrusion 221 may be configured to protrude from the extension portion 220 in a direction other than the first direction (the X-axis direction). Alternatively, in order to increase a fastening area between the support member 200 and the side frame 22, the length of the insertion protrusion 221 in the second direction (the Y-axis direction) may be configured to be greater than the length of the extension portion 220 in the second direction (the Y-axis direction).

The size of the insertion groove 22a may be configured to match the size of the insertion protrusion 221. Accordingly, the battery module 10 may be naturally aligned in the correct position during the process of inserting the insertion protrusion 221 into the insertion groove 22a. However, the size of the insertion groove 22a is not limited to the aforementioned size and, for example, may be greater than the size of the insertion protrusion 221.

According to embodiments, since the support member 200 of the battery module 10 is directly coupled to the side frame 22 of the pack housing 20, the pack housing 20 may have a structure in which a rigid member traversing the side frame 22 is omitted.

In the case of the battery pack of the related art, a number of cross frames are arranged to vertically and horizontally traverse the top surface of the bottom frame of the pack housing for structural rigidity. However, when using the battery module 10 according to embodiments, such cross frames may be omitted or the number of the cross frames may be significantly reduced. By omitting the cross frames, the dead space formed between the cross frames and the battery module 10 due to assembly tolerance may be significantly reduced.

That is, according to embodiments, the structure (i.e., the support member 200) that may instead perform the role of the cross frames mentioned above may be disposed inside the battery module 10 and assembled by stacking with the cell assembly 100, thereby fundamentally preventing the occurrence of the dead space mentioned above. Accordingly, a plurality of battery modules 10 may be intensively arranged within the limited space of the pack housing 20, and the battery pack 1 having high energy density may be implemented.

According to embodiments, the battery pack capable of maintaining structural rigidity, while having high energy density, may be implemented.

According to embodiments, the battery module and the battery pack having high structural stability may be provided by disposing the support member between a plurality of battery cells.

According to embodiments, the large battery module may be disposed within a limited space inside the battery pack.

Only specific examples of implementations of certain embodiments are described. Variations, improvements and enhancements of the disclosed embodiments and other embodiments may be made based on the disclosure of this patent document.

## Claims

1. A battery module comprising:
a plurality of cell assemblies respectively including a plurality of battery cells stacked in a first direction;
a support member disposed between the plurality of cell assemblies; and
a plurality of end covers facing at least one of the plurality of cell assemblies in the first direction,
wherein the support member protrudes in the first direction, relative to the plurality of end covers.

2. The battery module of claim 1, further comprising:
a module housing in which the plurality of cell assemblies and the support member are accommodated,
wherein the module housing includes:
a top cover covering the top of the plurality of cell assemblies; and
a side cover connected to the top cover and facing the plurality of cell assemblies in a second direction, perpendicular to the first direction.

3. The battery module of claim 2, wherein
at least one of the plurality of battery cells includes:
a case in which an electrode assembly is accommodated; and
a cap assembly coupled to the case, in which electrode terminals are arranged.

4. The battery module of claim 3, wherein the cap assembly faces the top cover.

5. The battery module of claim 3, wherein a bottom surface of the case is exposed to the outside of the module housing.

6. The battery module of claim 1, wherein
the support member includes:
a body portion facing at least one of the plurality of cell assemblies in a second direction, perpendicular to the first direction; and
an extension portion extending from the body portion in the first direction and passing between the plurality of end covers.

7. The battery module of claim 6, wherein the extension portion is disposed on each of both end portions of the support member in the first direction.

8. The battery module of claim 6, wherein the extension portion and the plurality of end covers are alternately arranged in the second direction.

9. The battery module of claim 6, wherein the plurality of end covers are welded to the extension portion.

10. A battery pack comprising:
a plurality of battery modules; and
a pack housing in which the plurality of battery modules are accommodated,
wherein at least one of the plurality of battery modules includes:
a plurality of cell assemblies respectively including a plurality of battery cells stacked in a first direction;
a support member disposed between the plurality of cell assemblies; and
a plurality of end covers facing at least one of the plurality of cell assemblies in the first direction,
wherein the support member protrudes in the first direction, relative to the plurality of end covers and is coupled to the pack housing.

11. The battery pack of claim 10, wherein
the support member includes:
a body portion facing at least one of the plurality of cell assemblies in a second direction, perpendicular to the first direction; and
an extension portion extending from the body portion in the first direction and passing between the plurality of end covers.

12. The battery pack of claim 11, wherein
the pack housing includes:
a bottom frame facing bottom surfaces of the plurality of battery modules; and
a plurality of side frames connected to the bottom frame and facing the plurality of battery modules in the first direction,
wherein the extension portion is coupled to the plurality of side frames.

13. The battery pack of claim 12, wherein a length of the support member in the first direction is equal to or greater than a gap between the plurality of side frames.

14. The battery pack of claim 12, wherein
the extension portion includes an insertion protrusion, and
the plurality of side frames includes an insertion groove into which the insertion protrusion is inserted.

15. The battery pack of claim 14, further comprising a fastening member fastened to the insertion groove through the insertion protrusion.
